# EUROPEAN PATENT APPLICATION

(11) **EP 4 704 075 A1**
(43) Date of publication of application: **04.03.2026**
(21) Application number: 24797173.2
(22) Date of filing: 26.04.2024
(51) Int. Cl.: G10K 15/00, G06F 30/13, G06F 30/20

(54) **LAYOUT DESIGN ASSISTANCE METHOD FOR ACOUSTIC EQUIPMENT, INFORMATION PROCESSING DEVICE, AND PROGRAM**

(30) Priority: 28.04.2023 JP 2023074895
(71) Applicant: YAMAHA CORPORATION, Hamamatsu-shi, Shizuoka 430-8650 (JP)
(72) Inventor: KATO Shinichi, Hamamatsu-shi, Shizuoka 430-8650 (JP); ONO Yusuke, Hamamatsu-shi, Shizuoka 430-8650 (JP); SUMIYOSHI Kyosuke, Hamamatsu-shi, Shizuoka 430-8650 (JP)
(74) Representative: Kehl, Ascherl, Liebhoff & Ettmayr Patentanwälte Partnerschaft mbB
(86) International application number: PCT/JP2024/016403
(87) International publication number: WO 2024/225428

(57) **Abstract**

A method of supporting arrangement design of acoustic devices receives an acoustic space and a position of a sound source in the acoustic space and a position of a noise source in the acoustic space, calculates, in the received acoustic space, arrangement distribution of the acoustic devices corresponding to the position of the sound source and the position of the noise source that have been received, and displays the calculated arrangement distribution on a display.

## Description

### Technical Field

An embodiment of the present disclosure relates to a method of supporting arrangement design of acoustic devices, an information processing apparatus, and a program.

### Background Art

Patent Literature 1 discloses a sound field simulator that simulates how a sound from a specific sound source in a sound field is listened to at a specific sound reception point according to design data on the sound field and generates a dummy sound field in an audio room.

### Citation List

### Patent Literature

Patent Literature 1: Japanese Unexamined Patent Application Publication No. H05-73081

### Summary of the Invention

### Technical Problem

For those having no technical knowledge, it is extremely difficult to determine an arrangement of an optimal acoustic device for appropriately collecting a voice of a talker in an acoustic space.

One aspect of this disclosure aims at providing a method of supporting arrangement design of acoustic devices, in an acoustic space, the method being capable of easily knowing an arrangement of an optimal acoustic device.

### Solution to Problem

A method of supporting arrangement design of acoustic devices according to an embodiment of the present disclosure receives an acoustic space and a position of a sound source in the acoustic space and a position of a noise source in the acoustic space, calculates, in the received acoustic space, arrangement distribution of acoustic devices including microphones corresponding to the position of the sound source and the position of the noise source that have been received, and outputs the calculated arrangement distribution.

### Effects of Invention

According to an embodiment of the present disclosure, a user can easily know an arrangement of an optimal acoustic device in an acoustic space from input information that requires neither acoustic technology nor acoustic knowledge.

### Brief Description of Drawings

[FIG. 1] is a block diagram showing a configuration of an information processing apparatus 1.
[FIG. 2] is a flowchart showing operations of a display method executed by a processor 12.
[FIG. 3] is a view showing an example of a screen (GUI) of an application program for displaying arrangement distribution of microphones.
[FIG. 4] is a view showing an example of the screen (GUI) of the application program for displaying arrangement distribution of microphones.
[FIG. 5] is a view showing an example of a result output screen.
[FIG. 6] is a view showing an example of the result output screen.
[FIG. 7] is a view showing an example of the result output screen.
[FIG. 8] is a view showing an example of the result output screen.
[FIG. 9] is a view showing an example of the result output screen.
[FIG. 10] is a view showing an example of the result output screen.
[FIG. 11] is a view showing an example of a GUI according to Modification 3.
[FIG. 12] is a view showing an example of a GUI according to Modification 5.
[FIG. 13] is a view showing an example of a GUI according to another example.
[FIG. 14] is a view showing an example of a GUI according to another example.
[FIG. 15] is a view showing an example of a GUI according to another example.
[FIG. 16] is a view showing an example of a GUI according to another example.
[FIG. 17] is a view showing an example of a GUI according to another example.
[FIG. 18] is a view showing an example of a GUI according to another example.
[FIG. 19] is a flowchart showing operations of a display method executed by the processor 12.
[FIG. 20] is a flowchart showing operations of a display method executed by the processor 12.
[FIG. 21] is a flowchart showing operations of a display method executed by the processor 12.
[FIG. 22] is a view showing an example of the screen (GUI) of the application program.
[FIG. 23] is a flowchart showing operations of a display method executed by the processor 12.
[FIG. 24] is a view showing an example of the screen (GUI) of the application program.
[FIG. 25] is a view showing an example of a GUI by use of an interactive natural language processing model.

### Description of Embodiments

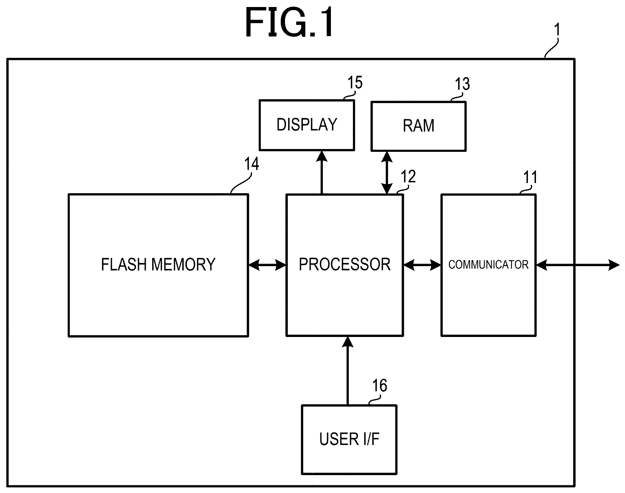

FIG. 1 is a block diagram showing a configuration of an information processing apparatus 1. The information processing apparatus 1 is achieved by an information processing apparatus such as a PC (a personal computer), a smartphone, a set top box, or an audio receiver.

The information processing apparatus 1 includes a communicator 11, a processor 12, a RAM 13, a flash memory 14, a display 15, and a user I/F 16.

The communicator 11 has a wireless communication function such as Bluetooth (registered trademark) or Wi-Fi (registered trademark), for example, or a wired communication function such as a USB or a LAN.

The display 15 includes an LCD or an OLED. The display 15 displays a video that the processor 12 has outputted.

The user I/F 16 is an example of an operator. The user I/F 16 includes a mouse, a keyboard, or a touch panel. The user I/F 16 receives an operation of a user. It is to be noted that the touch panel may be stacked on the display 15.

The processor 12 includes a CPU, a DSP, or an SoC (System on a Chip). The processor 12 reads out a program from the flash memory 14 being a storage medium, temporarily stores the program in the RAM 13, and thus performs various operations. It is to be noted that the program does not need to be stored in the flash memory 14. The processor 12, for example, may download from another apparatus such as a server and may temporarily store in the RAM 13, when necessary.

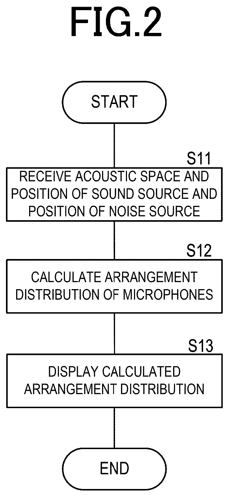

FIG. 2 is a flowchart showing operations of a display method executed by the processor 12. The processor 12 executes the display method shown in FIG. 2 by the application program read from the flash memory 14.

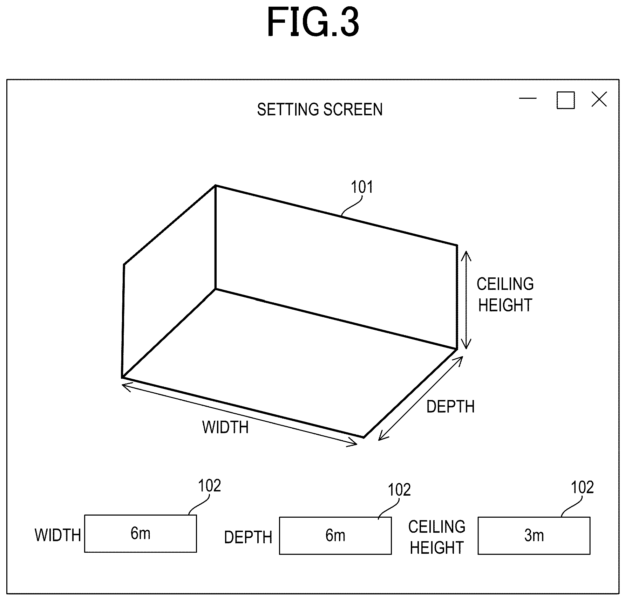

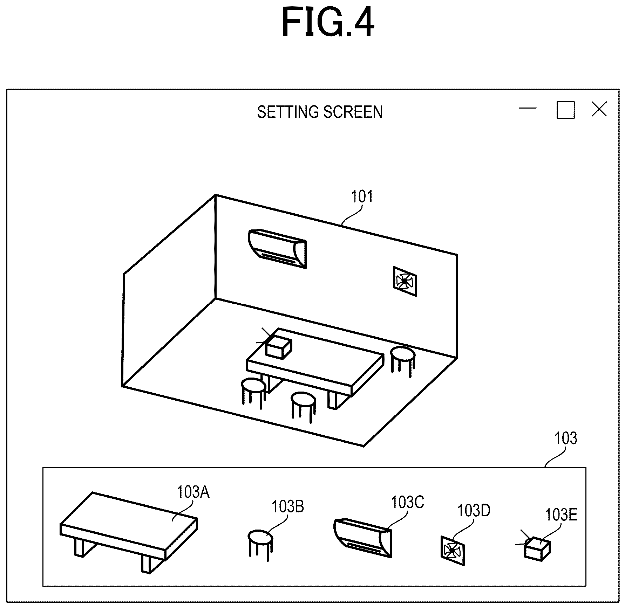

First, the processor 12 receives an acoustic space and a position of a sound source in the acoustic space and a position of a noise source (S11). FIG. 3 and FIG. 4 are views showing an example of a screen (GUI) of the application program for displaying arrangement distribution of microphones. The processor 12 displays a setting screen as shown in FIG. 3 on the display 15 and receives setting of the acoustic space from a user through the user I/F 16.

The GUI shown in FIG. 3 includes an acoustic space interface 101 and an acoustic space setting box 102. The user sets the acoustic space through the acoustic space interface 101 or the acoustic space setting box 102. For example, the user inputs a width, depth, and ceiling height of a room into the acoustic space setting box 102 and sets the acoustic space. Alternatively, the user, by moving a mouse cursor on the GUI to a certain position in the acoustic space interface 101, clicking, and performing a drag operation, may correct the width, depth, and ceiling height of the room. Alternatively, in a case in which the information processing apparatus 1 is provided with a sensor such as LiDar, the processor 12 may scan the shape of the room through the sensor and may receive the width, the depth, and the ceiling height. It is to be noted that, in a case in which a material transmits light like glass, the processor 12, by assuming that the shape of the acoustic space is, for example, a rectangular parallelepiped, is able to complement a part that transmits light, and estimate the shape of the room.

It is to be noted that, although the example that sets a three-dimensional acoustic space is shown in the present embodiment, a two-dimensional acoustic space in a plan view may be set or a one-dimensional acoustic space in a certain direction may be set. The user may set a straight line or a curve as the one-dimensional acoustic space. The user, as the two-dimensional acoustic space, may set a two-dimensional plane formed in a straight line, a two-dimensional plane formed in a curve, or a complex two-dimensional plane formed in a straight line and a curve. The user, as the three-dimensional acoustic space, may set a polyhedron formed by polygons, a column shape or a cone shape including a curved surface, or a spherical shape.

It is to be noted that the setting of the acoustic space shown in FIG. 3 is an example, and the application program may receive an acoustic space through any kind of interface. For example, the user may input a name such as a certain actual concert hall, and the application program may receive the shape of the acoustic space based on 3D CAD data corresponding to the inputted concert hall.

In addition, the processor 12 displays a GUI screen as shown in FIG. 4 on the display 15, and receives a position of a sound source and a position of a noise source that are in the acoustic space from the user through the user I/F 16.

The GUI shown in FIG. 4 includes the acoustic space interface 101 and an object icon 103. In the example of FIG. 4, the object icon 103 includes objects of a desk 103A, a chair 103B, an air conditioner 103C, a fan 103D, and a projector 103E. The user may numerically input the size of the objects or may make an adjustment by a drag-and-drop operation. By the drag-and-drop operation, an optional object of the object icon 103 is arranged in the acoustic space interface 101. In that case, the processor 12 may display a coordinate of an optional point of the object in the acoustic space. The objects of the desk 103A and chair 103B of the object icons 103 correspond to positions in which a conference participant (a talker) is present. The conference participant sits on a chair and emits a voice in the direction of the desk 103A or toward a screen (in a projection direction of the projector 103E). In short, the processor 12 estimates the position and directional orientation (a front direction) of the sound source from the positional relationship of the desk 103A and the chair 103B, and the screen. It is to be noted that the front direction may be inputted by the user on the GUI screen. In addition, the air conditioner 103C, the fan 103D, and the projector 103E correspond to the positions of the noise source. Alternatively, in a case in which the information processing apparatus 1 includes a camera, the processor 12, based on an image obtained by the camera, may estimate the position of the sound source (the chair 103B), and the position of the noise sources (the air conditioner 103C, the fan 103D, and the projector 103E) by image recognition processing.

Next, the processor 12, in the received acoustic space, calculates the arrangement distribution of the microphones based on a predetermined model, based on the position of the sound source and the position of the noise sources that have been received (S12). The arrangement distribution of the microphones includes information on at which position a microphone of what type and with what input characteristics is arranged. The processor 12 obtains the arrangement distribution of the microphones by use of a mathematical model or a trained model. The trained model is a model trained with a DNN (Deep Neural Network) a relationship between the position of the sound source, the position of the noise source, and the arrangement distribution of the microphones.

A computer (a server of a microphone manufacturer, for example) that generates the trained model, as a training phase, in a certain actual acoustic space, obtains a large number of data sets showing correspondence of the position of the sound source, the position of the noise source, and the arrangement distribution of the microphones. The server, by use of the large number of obtained data sets, causes the predetermined model to train by use of a predetermined algorithm so as to output the arrangement distribution of the microphones with respect to inputted conditions (the position of the sound source, the position of the noise source, and the like).

The algorithm for training the model can be any type. The algorithm is able to use any machine training algorithm, for example, a CNN (Convolutional Neural Network), an RNN (Recurrent Neural Network), or the like.

The processor 12 obtains the trained model trained as described above from the server through the communicator 11. The processor 12, as an executing phase, by the trained model, inputs the received acoustic space, the position of the sound source in the received acoustic space, and the position of a noise source, and obtains the arrangement distribution of corresponding microphones.

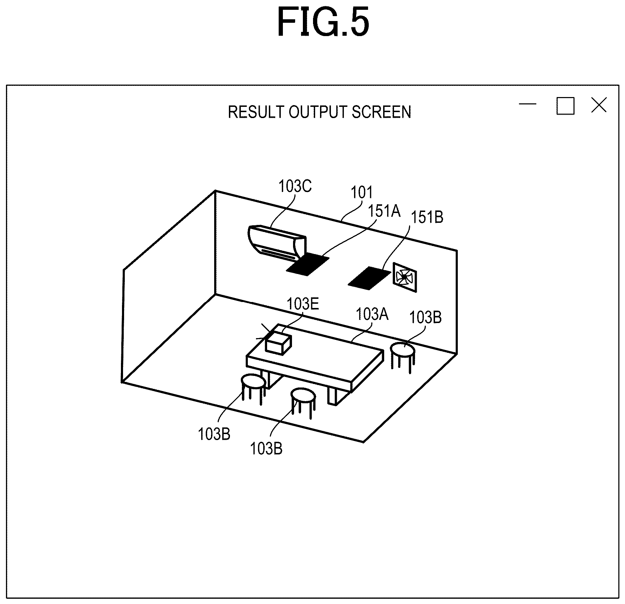

Then, the processor 12 displays the calculated arrangement distribution of the microphones on the display 15 (S13). FIG. 5 is a view showing an example of a result output screen. The processor 12 displays the arrangement distribution of the microphones calculated by processing of S12, in the acoustic space set by the acoustic space interface 101. The displayed arrangement distribution of the microphones includes at least the number and positions of microphones in the set acoustic space. In the example of FIG. 5, the processor 12 displays two microphones of the microphone 151A and microphone 151B in the acoustic space interface 101. The microphone 151A and the microphone 151B are displayed at the positions of the ceiling of the acoustic space interface 101.

As a result, the user, as a new customer experience, in addition to a desk and a chair in the set acoustic space, can easily know at which positions how many microphones may be installed, taking into account a constraint on the position of the noise source peculiar to the room. Accordingly, even a user who lacks product knowledge of a microphone, know-how of system design in the acoustic space, and the like can select a required microphone according to a request and can perform system design.

In addition, the processor 12, as the arrangement distribution of the microphones, may display the input characteristics (input sensitivity) of the microphone. The input characteristics of the microphone are represented as a voltage value (dBV) with no load when a sound pressure of 1 kHz, 1 Pa is applied in a direction of the highest sensitivity, for example.

As a result, the user, as a new customer experience, can easily know that a microphone with what kind of input characteristics may be installed. In addition, whether a sound in an area (hereinafter referred to as a cover area) in which the microphones in the designed system are required is collected is able to be visually checked.

The processor 12 may receive not only the position of the sound source and the position of the noise source but also further the sound pressure of each sound source and the sound pressure of the noise source. The sound pressure of the sound source corresponds to the sound pressure level and directivity of the voice of an average talker. The sound pressure of the noise source is obtained by previously measuring information on the sound pressure of each noise source (the air conditioner 103C, the fan 103D, and the projector 103E). The processor 12 records the previously measured in the flash memory 14 or the RAM 13 and may recall according to an arrangement operation from a user. The computer (the server of a microphone manufacturer, for example) that generates the trained model, as the training phase, in a certain actual acoustic space, obtains a large number of data sets showing correspondence of the position and sound pressure of the sound source, the position and sound pressure of the noise source, and the arrangement distribution of the microphones and causes the predetermined model train by use of the predetermined algorithm.

It is to be noted that the processor 12 may obtain an SN ratio (in other words, distribution A (X, Y, Z) of an SN ratio) of each position (X, Y, Z) in the acoustic space based on the position and sound pressure of the noise source and the position and sound pressure of the sound source and may obtain the arrangement distribution of the microphones from the distribution A (X, Y, Z) of the SN ratio as an input of the predetermined model. The arrangement distribution of the microphones is represented by a sphere (in other words, a function of the distribution A (X, Y, Z) of the SN ratio) of a radius R equivalent to a sound collection range, for example, in a case in which a nondirectional microphone is hypothetically installed at each position (X, Y, Z) in the acoustic space.

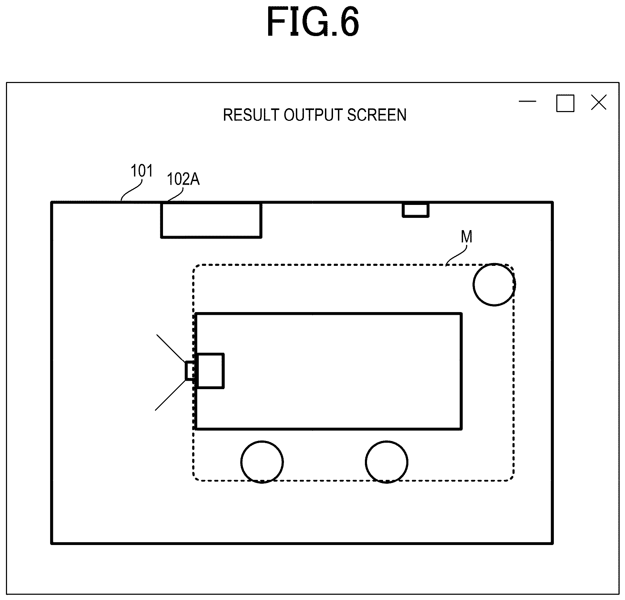

In addition, the processor 12 determines a target sound collection range based on the received position of the desk 103A and chair 103B. As described above, the conference participant sits on a chair and emits a voice in the direction of the desk 103A or toward a screen (in a projection direction of the projector 103E). The target sound collection range, as shown in, for example, FIG. 6, is a region M of a rectangular shape including all the desks 103A and chairs 103B. Alternatively, the user, by moving a mouse cursor on the GUI to a certain position in the acoustic space interface 101, clicking, and performing a drag operation, may designate the sound collection range.

The processor 12 inputs the distribution A (X, Y, Z) of the SN ratio and the target sound collection range into the predetermined model (the trained model) and obtains the arrangement distribution of the microphones.

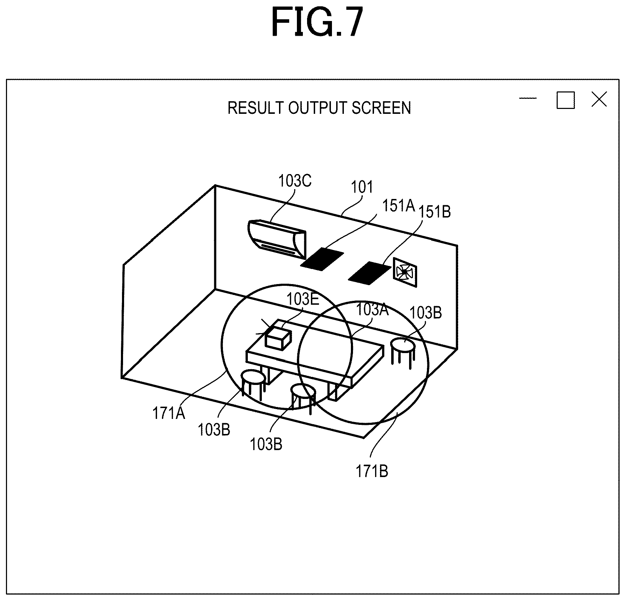

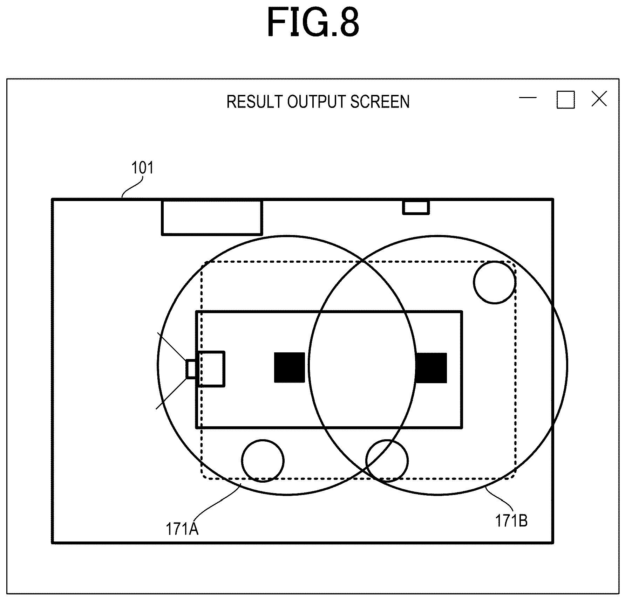

The processor 12 may display the position and sound collectable range (the sphere of a radius R, for example) of each microphone as the calculated arrangement distribution of the microphones. In addition, the processor 12 may display SN ratio distribution A (X, Y, Z). For example, in the example of FIG. 7, as the input characteristics of the microphone, the sound collectable range is shown by a sphere-shaped sound collection range icon 171A and sound collection range icon 171B. Alternatively, the arrangement distribution of the microphones may be represented by a two-dimensional plane, as shown in FIG. 8. As a result, the user, as a new customer experience, can easily know what kind of SN ratio distribution becomes in the calculated arrangement distribution of the microphones.

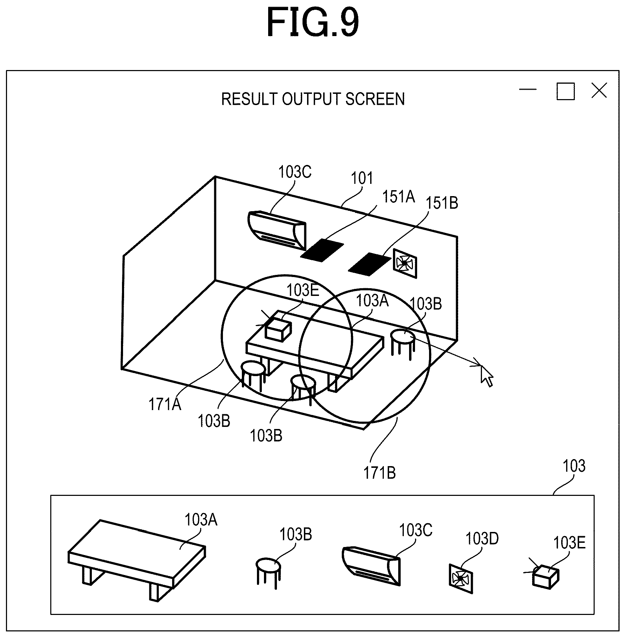

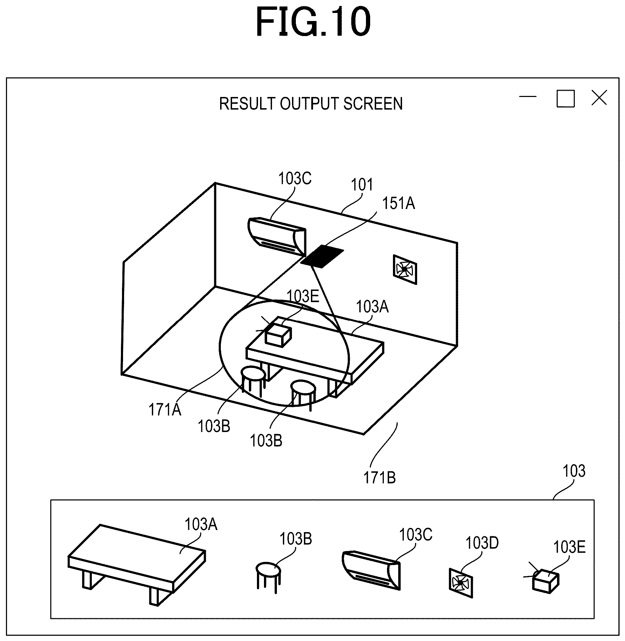

Further, the processor 12, in the result output screen, may receive a correction operation of an input condition. For example, the processor 12, as shown in FIG. 9, in the result output screen, further displays the object icon 103 for a condition input. The user can drag and drop each object from the object icon 103 and can also further add an object in the acoustic space interface 101. In addition, as shown in FIG. 9, the object (the chair 103B) already arranged in the acoustic space interface 101 is also able to be dragged and dropped outside the acoustic space interface 101 to delete the object (the chair 103B). The processor 12 recalculates the arrangement distribution of the microphones based on the corrected input condition. The processor 12, as shown in FIG. 10, displays the recalculated arrangement distribution of the microphones. The processor 12, when recalculating, may designate the number of acoustic devices and may recalculate arrangement capable of covering the widest area within the constraints of the number of devices. As a result, the user, as a new customer experience, can easily know optimal arrangement within a certain budget, and performance prediction for such a case.

As a result, the user can also increase design accuracy by correcting the input condition with reference to a result with respect to a first inputted condition. The GUI, in the result output screen, may display a list of input conditions, microphones, and acoustic devices, and display a list of arrangement diagrams or cover area diagrams of the microphones. The arrangement diagrams or the cover area diagrams are easily switched by an operation by the user. In addition, the diagrams may be switched to block diagrams.

### (Modification 1)

A processor 12 according to Modification 1 obtains reflected sound distribution in the acoustic space. The processor 12 further obtains the arrangement distribution of the microphones from the reflected sound distribution as an input. The reflected sound distribution includes a position at which a reflected sound generates and information on a sound pressure. The position of the reflected sound is obtained by the position of a sound source and the position of a wall surface, and the position of a noise source and the position of a wall surface.

The processor 12 receives a material (a board, glass, concrete, a tile, a carpet, a rock wool sound-absorbing board, or the like) of the wall surface in the acoustic space by the GUI. It is to be noted that, in the case in which the information processing apparatus 1 includes a camera, the processor 12 may estimate the material of the wall surface by image recognition processing, based on the image obtained by the camera. The processor 12 estimates the sound pressure and distribution of the reflected sound based on sound absorption corresponding to the shape of the acoustic space and the material of the wall surface. In that case, the processor 12, based on a positional relationship of a microphone and a sound source, a noise source, and a reflected sound, may obtain an SN ratio according to a direction in any microphone position, may calculate a nonspherical sound collectable range from the SN ratio according to the direction as an input argument and then may calculate optimal arrangement distribution of the microphones. It is to be noted that the optimal arrangement distribution of the microphones is defined as "arrangement capable of covering a required sound collection area with the minimum number of microphones" or, receiving cost information of each microphone, may be defined as "arrangement capable of covering a required sound collection area with the minimum cost of microphones".

The processor 12 regards the reflected sound calculated as described above as a noise source. The processor 12 inputs the received acoustic space, position of the sound source, and position of the noise source into the trained model and obtains the arrangement distribution of corresponding microphones.

As a result, the user, as a new customer experience, can easily know more optimal arrangement of the microphones in consideration of the reflected sound of the room.

### (Modification 2)

A processor 12 according to Modification 2 receives information on directivity of microphones and further calculates arrangement distribution of the microphones, based on the information on the directivity of the microphones.

In this case, the server, as a training phase, obtains a great deal of SN ratio distribution when microphones that have certain input characteristics and have certain directivity are installed in a certain acoustic space. The server causes a predetermined model to train a relationship with the arrangement distribution of the microphones, the directivity of the microphones, and the SN ratio distribution, by use of a predetermined algorithm.

The processor 12 obtains the trained model trained as described above from the server through the communicator 11. The processor 12, as an executing phase, by the trained model, inputs the received acoustic space, the SN ratio distribution in the acoustic space, and the information on the directivity of the microphones, and obtains the arrangement distribution of corresponding microphones.

As a result, the user, as a new customer experience, can easily know more optimal arrangement of the microphones in consideration of the directivity.

### (Modification 3)

A processor 12 according to Modification 3 receives the number of fixed microphones fixed in a room in advance, a position, and input characteristics and further calculates arrangement distribution of a required microphone based on the number of fixed microphones, the position, and the input characteristics.

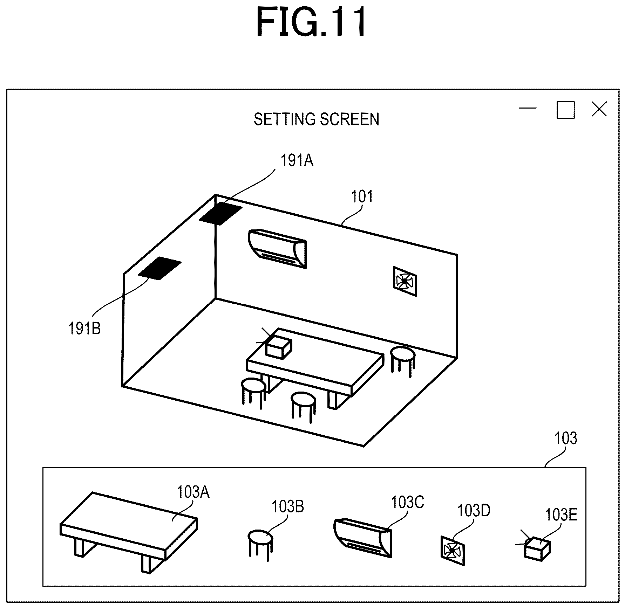

FIG. 11 is a view showing an example of a screen (GUI) of an application program according to Modification 3. A user further sets the number and position of fixed microphones in the acoustic space interface 101. In the example of FIG. 11, the processor 12 receives two fixed microphones 191A and 191B that are installed on a ceiling in an acoustic space through the acoustic space interface 101.

The processor 12, using the input characteristics of the received fixed microphones 191A and 191B as a restraint condition, by a trained model, inputs the received acoustic space and target SN ratio distribution in the acoustic space, and obtains the arrangement distribution of corresponding microphones.

The processor 12 displays microphones to be required in order to obtain the target SN ratio distribution in addition to the fixed microphones 191A and 191B.

As a result, the user, as a new customer experience, in the set acoustic space, can easily know the optimal microphone arrangement in consideration of the previously fixed microphones as facilities in the room.

### (Modification 4)

A processor 12 according to Modification 4, in the acoustic space, receives a position at which a microphone is unable to be installed, and further calculates arrangement distribution of microphones based on an uninstallable position.

For example, in an actual room, a microphone is unable to be installed on a glass surface such as a window. The user designates by the GUI a place (an uninstallable position) in which a microphone in the actual room is unable to be installed.

The processor 12, using the received uninstallable position as a restraint condition, obtains the arrangement distribution of microphones by the trained model. Alternatively, the processor 12 may further receive the position of a speaker in the acoustic space. A microphone is unable to be installed at the position of a speaker. The processor 12 may further add a restraint condition for setting the position of a speaker to an uninstallable position and may obtain arrangement distribution.

As a result, the user, as a new customer experience, in the set acoustic space, can easily know the optimal arrangement of microphones in consideration of the position at which a microphone is unable to be installed.

### (Modification 5)

A processor 12 according to Modification 5 records calculated arrangement distribution, receives information on a microphone installed in an actual acoustic space, compares the recorded arrangement distribution at the time of design with the information on a microphone, and outputs a comparison result.

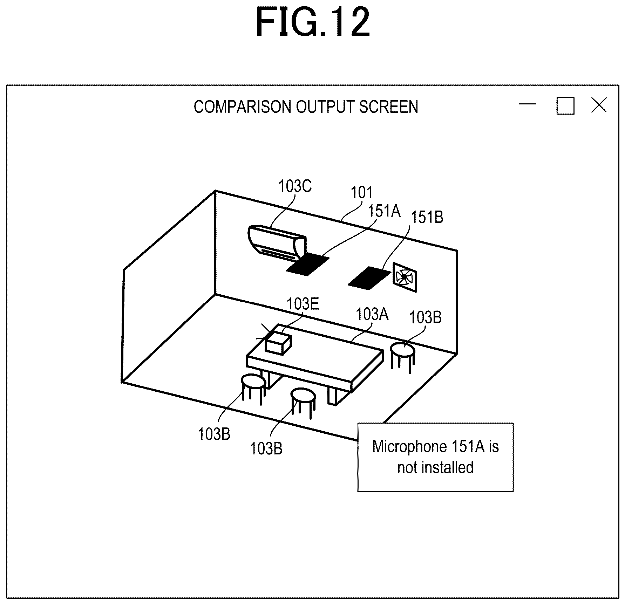

For example, the processor 12 records the calculated arrangement distribution in the flash memory 14. In addition, the processor 12 connects with the microphone installed in the actual acoustic space, and receives information such as a model name of the microphone or the like. For example, the processor 12 compares the number of microphones in the calculated arrangement distribution with the number of microphones based on the obtained information on the microphone. Alternatively, the processor 12 may compare the model name of the microphone in the calculated arrangement distribution with the model name of the microphone based on the obtained information on the microphone. The processor 12, in a case in which the number of microphones in the calculated arrangement distribution is different from the number of microphones in the recorded arrangement distribution at the time of design, or, in a case in which the model name of the microphone in the calculated arrangement distribution is different from the model name of the microphone based on the obtained information on the microphone, as shown in FIG. 12, displays information on a microphone that is not installed, in a comparison output screen.

As a result, a user can know before use that a microphone with an incorrect specification is installed, microphones are insufficient, or excessive microphone are installed.

In addition, the arrangement distribution in the past may be arrangement distribution when a microphone is first installed in the acoustic space. In this case, the processor 12, in a case in which a defect occurs after a practical use, compares the arrangement distribution when the microphone is first installed with information on a currently installed microphone, and outputs a comparison result. Hypothetically, in a case in which the arrangement distribution when the microphone is first installed matches the information on a currently installed microphone, the user can understand that a product is installed according to specifications at the time of installation but has caused a defect caused by a failure or the like of a product after use. Therefore, the user can easily know whether the cause is a defect occurred because a microphone is not installed according to specifications when installed or a defect caused by a change has been applied to wiring after use or a failure or the like of a product. In addition, when the microphone is first installed, in a case in which acoustic characteristics of a setting space are measured, a remeasured result is compared at the time of a problem occurrence, which makes it easy to know whether the defect is caused by a change in characteristics of the setting space. In addition, when the microphone is first installed, in a case in which an operation check is performed according to a certain sequence, a result of an operation recheck is compared, which makes it possible to easily know an operation with a defect. As a result, even a user without acoustic technology or acoustic knowledge can identify a cause at the time of a defect occurrence.

For example, a calculation result is not necessary to be displayed on the display 15 of the information processing apparatus 1. The processor 12 may output the calculation result to other devices.

For example, the processor 12 may associate a plurality of acoustic spaces with a plurality of data sets according to arrangement distribution as a past calculation result and may accumulate a large amount of data in the flash memory 14, the RAM 13, a not-shown server, or the like, as a database. In this case, the processor 12 obtains the arrangement distribution corresponding to the received acoustic space with reference to the database. Alternatively, the processor 12 is also able to obtain the arrangement distribution of microphones by referring to the database and reading the arrangement distribution of the microphones corresponding to the input condition such as the desk 103A or the chair 103B. In this case, the processor 12 is also able to obtain the arrangement distribution of microphones without using the model.

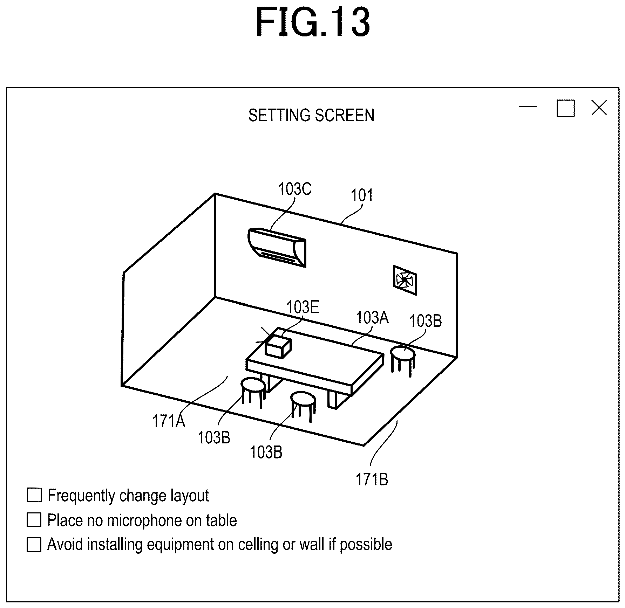

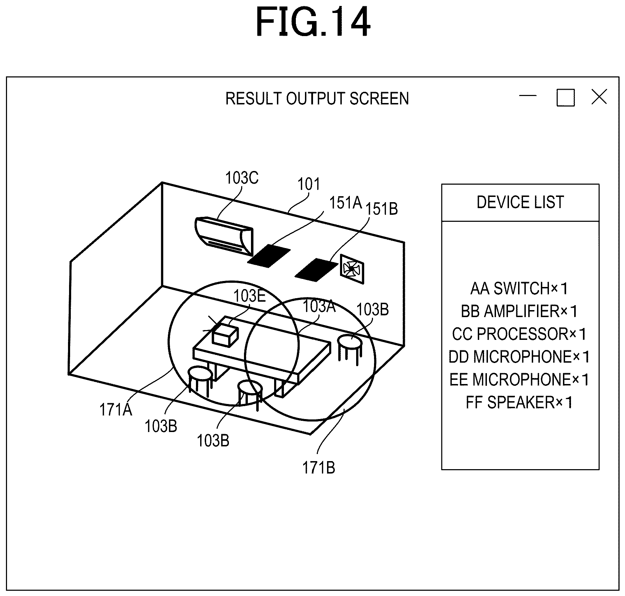

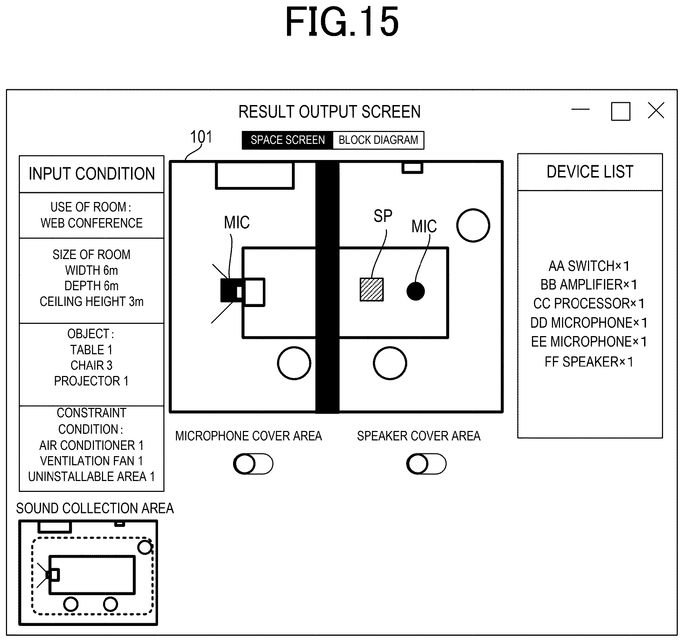

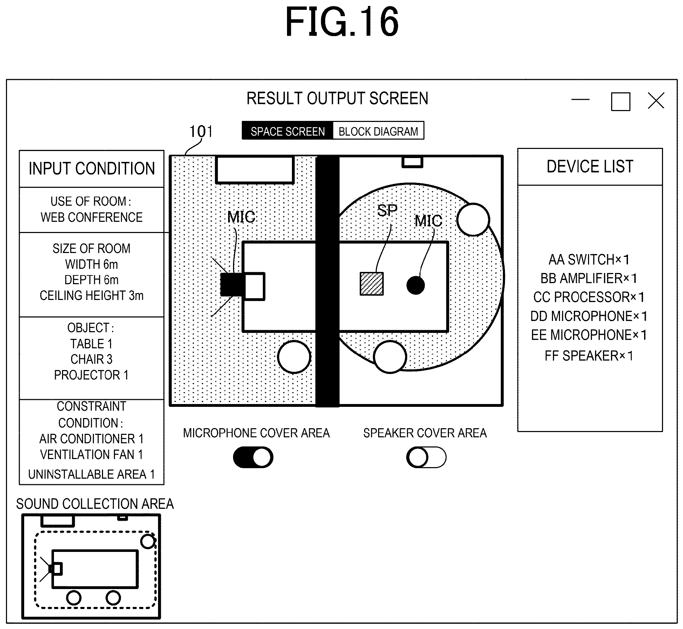

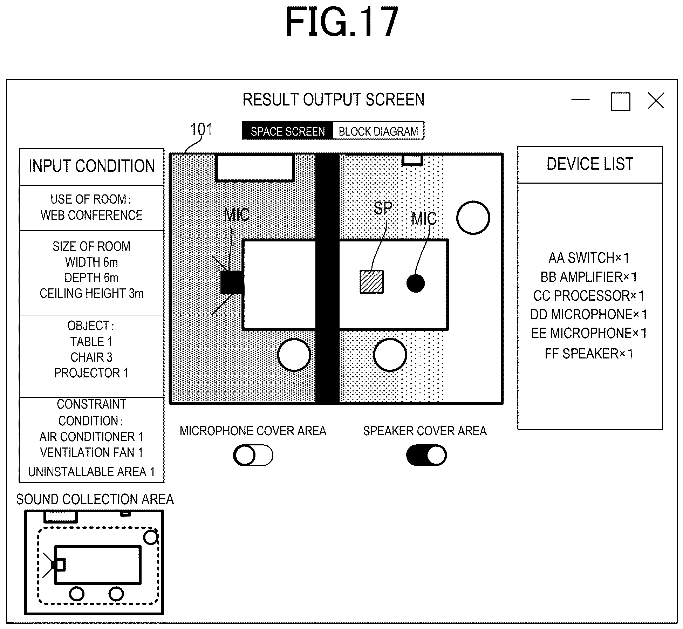

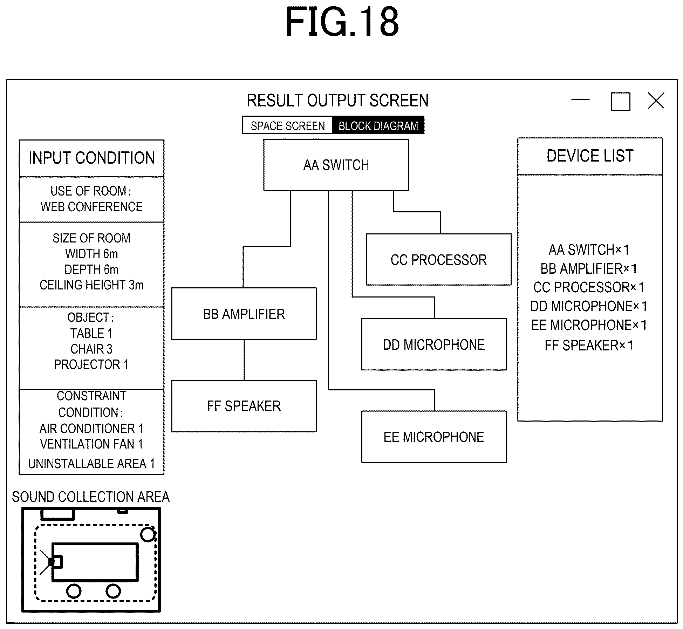

In addition, the processor 12, as shown in FIG. 13, may receive a request (for example, a request to frequently change a layout, a request not to place a microphone on a table, or a request to avoid installing equipment on a ceiling or a wall as much as possible) with respect to an acoustic space desired to be installed and may select a model (a product number or the like) of a microphone based on the request. In this case, the processor 12 is able to determine the product number and number of optimal microphones. In addition, the processor 12 may similarly select not only the microphones but also the arrangement distribution and product number of speakers by receiving the setting of a target sound emission area. The processor 12 is able to determine the product number and number of microphones and speakers and can further determine the number of ports and an amount of electric power required for peripheral equipment such as a processor required for audio signal processing, amplifier, and network switch. The processor 12 may also select the product number and number of products that satisfy the required number of ports and electric power among the product numbers of the processor for audio signal processing, amplifier, and network switch that have been previously determined. As a result, as a new customer experience, even a user who lacks product knowledge of acoustic devices, know-how of system design in the acoustic space, and the like can easily design the entire system according to a request. In addition, the processor 12, as shown in FIG. 14, may display a list of the product number and number of devices of a set of devices required for the entire system. In addition, the processor 12, as shown in FIG. 15, may display an arrangement view of microphones and speakers in the acoustic space. In addition, the processor 12, as shown in FIG. 16, may display a cover area view of microphones in the acoustic space. The processor 12, when receiving an operation of a switch icon of a "microphone cover area" on the result output screen of FIG. 15, displays the cover area view of microphones shown in FIG. 16. In addition, the processor 12, as shown in FIG. 17, may display a cover area view of speakers. The processor 12, when receiving an operation of a switch icon of a "speaker cover area" on the result output screen of FIG. 15, displays the cover area view of speakers shown in FIG. 17. The processor 12, when receiving an operation of both switch icons of the "microphone cover area" and the "speaker cover area" on the result output screen of FIG. 15, may display an overlaid microphone and speaker cover area. In addition, the processor 12, as shown in FIG. 18, may display a block diagram of a set of devices required for the entire system. In that case, the processor 12 may switch a display of the arrangement view of microphones and speakers in the acoustic space with a display of the block diagram by receiving a selection of a tab displayed at the top portion of the result output screen. In addition, the processor 12 may output an estimate of a purchase price of the set of devices required for the entire system.

In addition, the processor 12, on the result output screen, may receive instructions of an addition or deletion of a desired microphone and speaker or may receive movement by the drag-and-drop operation, from a user. In that case, the processor 12, according to the instructions of an addition or deletion of a microphone or speaker, may change the list of the product number and number of devices of a set of devices required for the entire system, the block diagram, the arrangement view of microphones and speakers in the acoustic space, the cover area view of microphones and speakers in the acoustic space, and the estimate of a purchase price of the set of devices required for the entire system, and may display a change result in real time.

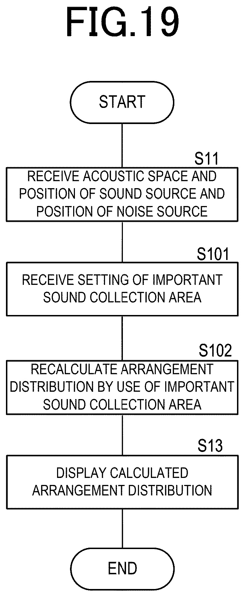

FIG. 19 is a flowchart showing operations of a display method executed by the processor 12. The same reference numerals are used to refer to operations common to the operations shown in FIG. 2, and the description will be omitted.

The processor 12 receives the acoustic space, the position of a sound source, and the position of a noise source in S11 and then further receives the setting of an important sound collection area present in the acoustic space (S101). The important sound collection area is an area in which an important participant in a conference, such as the president of a company, for example, is present. The important sound collection area sets a target SN ratio higher than other areas, in this example. For example, the target SN ratio of the important sound collection area is about 10 dB higher than the target SN ratio of the other areas.

The processor 12 inputs the received acoustic space and the target SN ratio distribution by a predetermined trained model, for example, and obtains the arrangement distribution of a corresponding microphone (S102). The processor 12 displays a microphone to be required in order to obtain the target SN ratio distribution, as a calculated result (S13).

As a result, as a new customer experience, even a user who lacks know-how of system design in the acoustic space, and the like can easily obtain optimal arrangement distribution of microphones in consideration of the area in which an important participant in a conference is present.

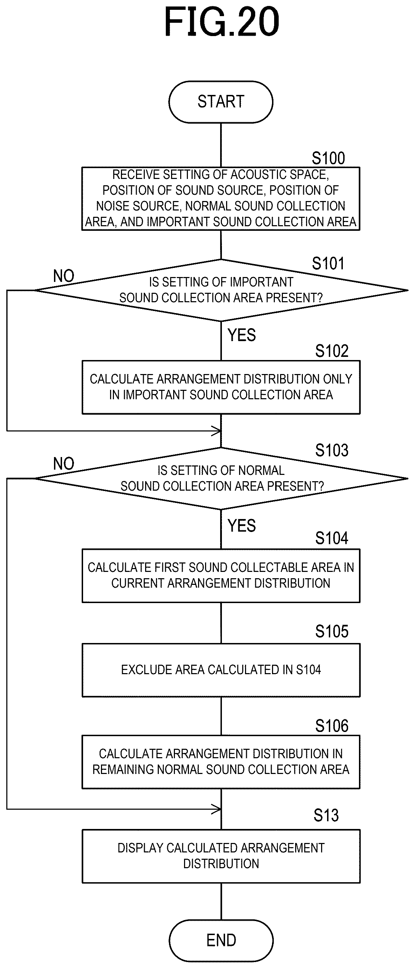

FIG. 20 is a flowchart showing operations of a display method executed by the processor 12. The same reference numerals are used to refer to operations common to the operations shown in FIG. 19, and the description will be omitted.

In the example of FIG. 20, the processor 12, when first receiving the acoustic space, the position of a sound source, and the position of a noise source, further receives the setting of a normal sound collection area or the important sound collection area (S100). The important sound collection area, as described above, is an area in which an important participant in a conference, such as the president of a company, for example, is present. The user sets the important sound collection area by using a GUI. The normal sound collection area corresponds to a target sound-collecting range (a region M of a rectangular shape) shown in, for example, FIG. 6. The user, by moving a mouse cursor, for example, by using the GUI shown in FIG. 6, to a certain position in the acoustic space interface 101, clicking, and performing a drag operation, sets the normal sound collection area.

The processor 12 determines whether or not the setting of the important sound collection area is present (S101). The processor 12, in a case of determining that the setting of the important sound collection area is present (in a case in which S101 is YES), obtains first arrangement distribution obtained by calculating arrangement distribution by use of only the important sound collection area (S102). The processor 12, when determining that the setting of the important sound collection area is absent (in a case in which S101 is NO), does not perform processing of S102 and proceeds to S103.

Next, the processor 12 determines whether or not the setting of the normal sound collection area is present (S103). The processor 12, in a case of determining that the setting of the normal sound collection area is present (in a case in which S103 is YES), calculates a first sound collection area being an area in which a sound is collectable in the currently calculated arrangement distribution (S104). For example, the processor 12 calculates an area in which the target SN ratio is satisfied in the arrangement distribution calculated in S102, as the first sound collection area.

Next, the processor 12 obtains a second sound collection area obtained by excluding the first sound collection area that is calculated in S104 from the normal sound collection area (S105). Then, the processor 12 obtains second arrangement distribution obtained by calculating arrangement distribution in the remaining normal sound collection area (the second sound collection area) (S106).

The processor 12, when determining that the setting of the normal sound collection area is absent (in a case in which S103 is NO), does not perform processing of S104-S106 and proceeds to S103.

The processor 12 displays the calculated result (S13). As a result, the processor 12 calculates appropriate arrangement distribution according to the setting of the normal sound collection area and important sound collection area that the user has inputted.

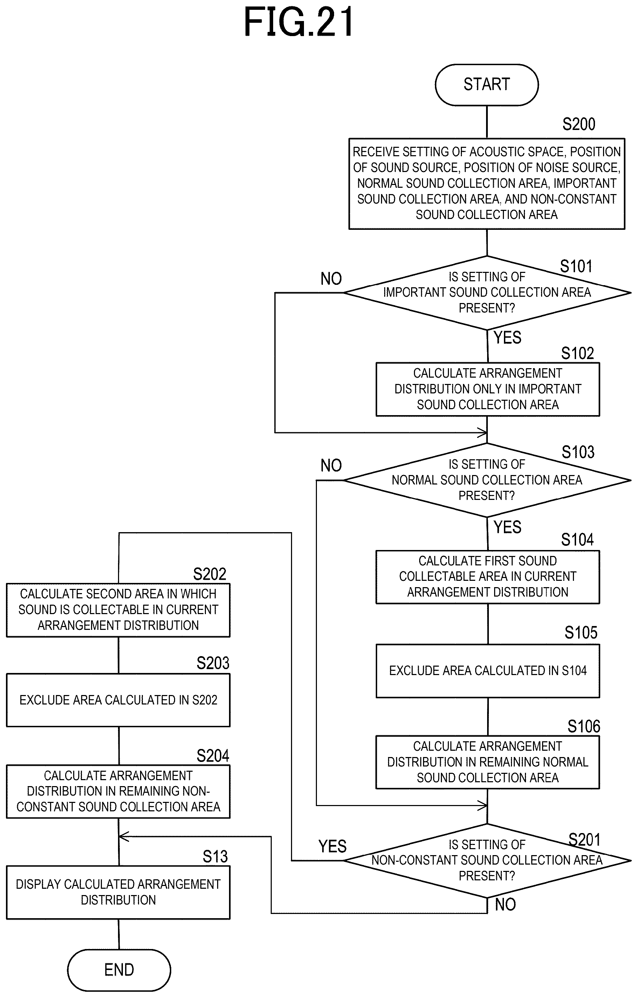

FIG. 21 is a flowchart showing operations of a display method executed by the processor 12. The same reference numerals are used to refer to operations common to the operations shown in FIG. 20, and the description will be omitted.

In the example of FIG. 21, the processor 12, when receiving the acoustic space, the position of a sound source, and the position of a noise source, further receives the setting of a normal sound collection area, the important sound collection area, and an non-constant sound collection area (S200). The non-constant sound collection area is an area in which constant sound collection does not need in a conference. The non-constant sound collection area, in a case in which one large room is divided into a main area and the other areas by a sliding wall or the like, for example, is equivalent to a position corresponding to the other areas.

The processor 12, after the processing of S106 or in a case of determining that the setting of the normal sound collection area is absent (in the case in which S103 is NO) in S103, determines whether or not the setting of the non-constant sound collection area is present (S201). The processor 12, in a case of determining that the setting of the non-constant sound collection area is present (in a case in which S201 is YES), calculates a second sound collection area being an area in which a sound is collectable in the currently calculated arrangement distribution (S202). For example, the processor 12 calculates an area in which the target SN ratio is satisfied in the arrangement distribution calculated in S102 or S106, as the second sound collection area.

Next, the processor 12 obtains a third sound collection area obtained by excluding the second sound collection area that is calculated in S202 from the non-constant sound collection area (S203). Then, the processor 12 obtains third arrangement distribution obtained by calculating arrangement distribution in the remaining non-constant sound collection area (the third sound collection area) (S204). The processor 12, in a case of determining that the setting of the non-constant sound collection area is absent (in a case in which S201 is NO), does not perform processing of S202-S204 and proceeds to S13.

The processor 12 displays the calculated result (S13). As a result, the processor 12 calculates appropriate arrangement distribution according to the setting of the normal sound collection area, important sound collection area, and non-constant sound collection area that the user has inputted.

Although, in the example of FIG. 21, an example in which the first arrangement distribution, the second arrangement distribution, and the third arrangement distribution are calculated is shown, the processor 12 may calculate only the first arrangement distribution, may calculate only the second arrangement distribution, or may calculate only the third arrangement distribution. In addition, the processor 12 may calculate the second arrangement distribution and the third arrangement distribution without calculating the first arrangement distribution, may calculate the first arrangement distribution and the third arrangement distribution without calculating the second arrangement distribution, or may calculate the first arrangement distribution and the second arrangement distribution without calculating the third arrangement distribution.

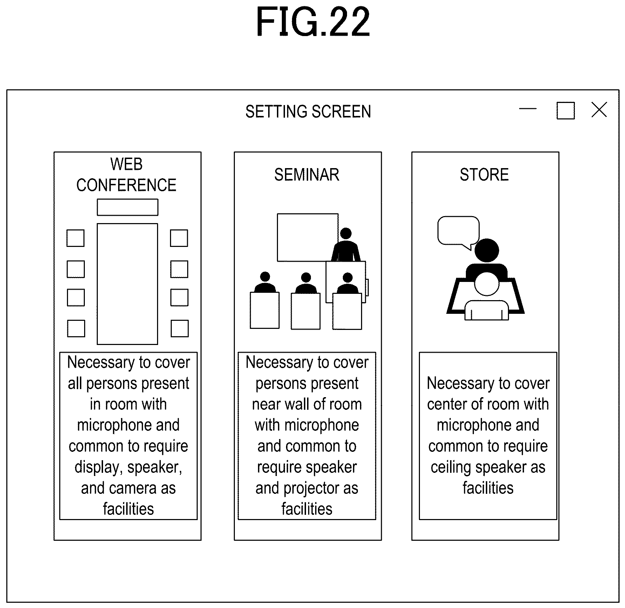

FIG. 22 is a view showing an example of the screen (GUI) of the application program. The processor 12 receives an acoustic space through a simple setting screen as shown in FIG. 22. The processor 12, as the acoustic space that a user desires to construct, displays a plurality of (three in FIG. 22) templates "WEB CONFERENCE," "SEMINAR," and "STORE" of the acoustic space. The processor 12 receives a selection of one acoustic space from the plurality of templates of these acoustic spaces.

The processor 12, for example, associates a plurality of acoustic spaces with a plurality of data sets according to arrangement distribution as a past calculation result and accumulates a large amount of data in the flash memory 14, the RAM 13, a not-shown server, or the like, as a database. The processor 12 calculates the arrangement distribution corresponding to the received acoustic space with reference to the database.

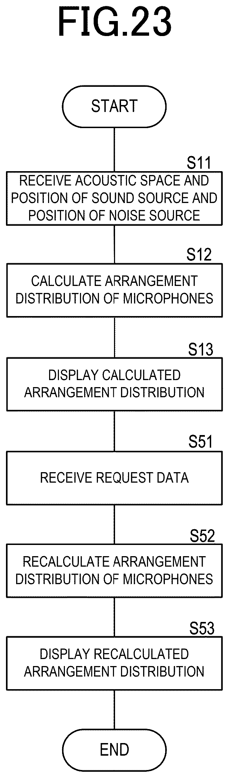

As a result, the processor 12 is able to simply receive a request of the acoustic space from a user. Then, the processor 12, by displaying the calculated arrangement distribution from a simple request and then further receiving a detailed request of a sound environment from the user, calculates arrangement distribution. FIG. 23 is a flowchart showing operations of a display method executed by the processor 12. The same reference numerals are used to refer to operations common to the operations shown in FIG. 2, and the description will be omitted.

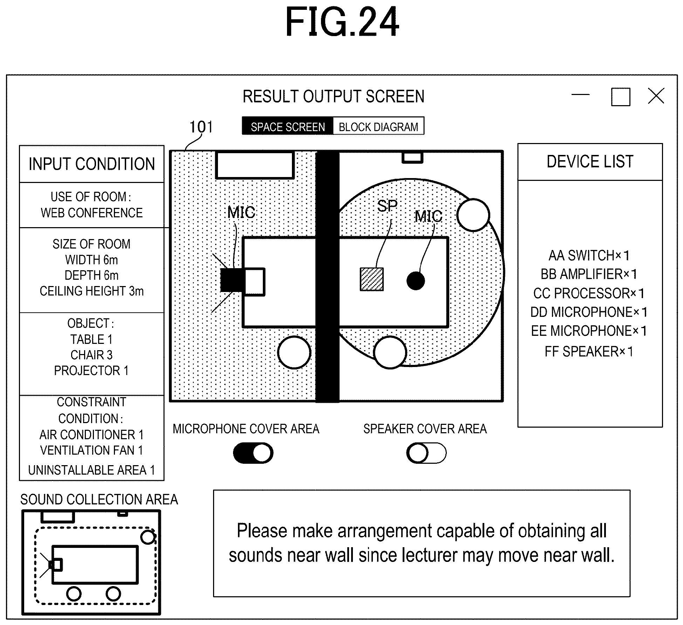

The processor 12, after displaying the calculated arrangement distribution (after S13), receives request data according to the request of the sound environment of the user with respect to the calculated arrangement distribution (S51). The processor 12, as shown in, for example, FIG. 24, as the arrangement distribution, displays the cover area view of the microphones in the acoustic space and further displays a box for receiving request data in the screen. The user inputs text data into the receiving box as the request data. In the example of FIG. 24, the user inputs "since a lecturer may move near a wall, please make arrangement capable of obtaining all sounds near the wall" as text data. The processor 12, by a natural language processing model, obtains information (a keyword) according to the request data of the sound environment of the user, the information being included in the inputted text data. The natural language processing model is a model trained so as to output the keyword of the request data corresponding to a text by use of a large number of data sets made of combinations of text data and a keyword of the request data. The processor 12 inputs the received text into the natural language processing model and obtains corresponding request data.

Then, the processor 12 recalculates the arrangement distribution of the microphones (S52) and displays the recalculated arrangement information (S53). In particular, the processor 12, in processing of S52, prepares the trained model trained so as to output arrangement of acoustic devices such as microphones, with respect to the inputted data, inputs the request data with respect to the trained model, and obtains the arrangement information on a corresponding acoustic device.

As a result, even a user who lacks product knowledge of acoustic devices, know-how of system design in the acoustic space, and the like can more simply and more highly accurately design the entire system only by first making a simple request by the GUI and making the request by a text input with respect to the calculated arrangement distribution.

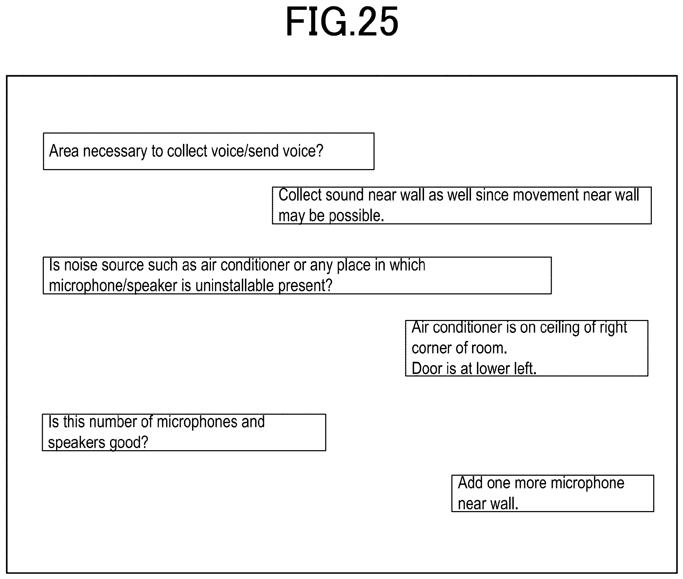

FIG. 25 is a view showing an example of a GUI by use of an interactive natural language processing model. The GUI shown in FIG. 25 receives the request data by use of the interactive natural language processing model. The GUI asks a question about a request of a sound environment and a user inputs an answer to the question.

The processor 12 receives text data according to the request data by use of the interactive natural language processing model, inputs the text data of the request data with respect to the trained model, and obtains arrangement information on a corresponding acoustic device.

As a result, the user, only by answering to the question, can more simply and more highly accurately design the entire system.

The arrangement distribution of acoustic devices may include connection information between a plurality of acoustic devices. The processor 12 may prepare a trained model trained so as to output the connection information between the plurality of acoustic devices, as the arrangement distribution corresponding to the request data, may input the received request data with respect to the trained model, and may obtain corresponding connection information. The processor 12 may display the calculated connection information by the GUI.

As a result, the user can connect the plurality of acoustic devices by viewing the connection information displayed on the GUI and can easily perform connection of the acoustic devices without making any mistake in the connection.

The arrangement distribution of acoustic devices may include information on a parameter of signal processing to be performed by an acoustic device. The processor 12 may prepare a trained model trained so as to output the information on the parameter of the signal processing to be performed by the acoustic device, as the arrangement distribution corresponding to the request data, may input the received request data with respect to the trained model, and may obtain corresponding parameter. The processor 12 may display the information on the calculated parameter by the GUI.

As a result, the user, by viewing the displayed signal processing parameter, can easily set the parameter of the signal processing to be performed by the acoustic device.

The processor 12 may receive current information showing an installation state of a current acoustic device. The processor 12, as the arrangement distribution of acoustic devices, may calculate correction information with respect to the current information. The correction information includes all of information that points out an incorrect portion with respect to the current information, information showing a result of correct connection, and update information obtained by adding new information to the current information.

As a result, the user can easily correct the setting of the acoustic devices by viewing the displayed correction information.

The description of the present embodiments is illustrative in all points and should not be construed to limit the present disclosure. The scope of the present disclosure is defined not by the foregoing exemplary embodiments but by the following claims. Further, the scope of the present disclosure is intended to include all modifications within the scopes of the claims and within the meanings and scopes of equivalents.

### Reference Signs List

1: information processing apparatus, 11: communicator, 12: processor, 13: RAM, 14: flash memory, 15: display, 16: user I/F, 101: acoustic space interface, 102: acoustic space setting box, 103: object icon, 103A: desk, 103B: chair, 103C: air-conditioner, 103D: fan, 103E: projector, 151A: microphone, 151B: microphone, 171A: sound collection range icon, 171B: sound collection range icon, 191A: fixed microphone, 191B: fixed microphone

## Claims

1. A method of supporting arrangement design of acoustic devices, the method comprising:
receiving an acoustic space and a position of a sound source in the acoustic space and a position of a noise source in the acoustic space;
calculating, in the received acoustic space, arrangement distribution of acoustic devices including microphones corresponding to the position of the sound source and the position of the noise source that have been received; and
outputting the calculated arrangement distribution.

2. The method of supporting arrangement design of acoustic devices, according to claim 1, the method comprising obtaining an SN ratio based on the position of the noise source and the position of the sound source, wherein the arrangement distribution is obtained from the SN ratio as an input.

3. The method of supporting arrangement design of acoustic devices, according to claim 1 or claim 2, wherein the arrangement distribution shows a number and positions of the microphones in the acoustic space.

4. The method of supporting arrangement design of acoustic devices, according to any one of claim 1 to claim 3, wherein the arrangement distribution includes input characteristics of the microphones.

5. The method of supporting arrangement design of acoustic devices, according to any one of claim 1 to claim 4, the method comprising:
receiving information on directivity of the microphones; and
further calculating the arrangement distribution of the microphones, based on the information on the directivity.

6. The method of supporting arrangement design of acoustic devices, according to claim 2, the method comprising:
calculating SN ratio distribution corresponding to the calculated arrangement of the microphones; and
outputting the calculated SN ratio distribution.

7. The method of supporting arrangement design of acoustic devices, according to any one of claim 1 to claim 6, the method comprising obtaining reflected sound distribution in the acoustic space, wherein the arrangement distribution is further obtained from the reflected sound distribution as an input.

8. The method of supporting arrangement design of acoustic devices, according to any one of claim 1 to claim 7, the method comprising:
recording the calculated arrangement distribution;
receiving information on the microphones installed in an actual acoustic space;
comparing the recorded past arrangement distribution with the information on the microphones; and
outputting a comparison result.

9. The method of supporting arrangement design of acoustic devices, according to claim 8, wherein the comparing includes comparing the number of microphones in the information on the microphones with the number of microphones in the recorded past arrangement distribution.

10. The method of supporting arrangement design of acoustic devices, according to claim 8, wherein the past arrangement distribution is arrangement distribution when the microphones are first installed in the acoustic space.

11. The method of supporting arrangement design of acoustic devices, according to claim 2, the method comprising:
receiving setting of an important sound collection area that is present in the acoustic space; and
calculating the arrangement distribution by setting the SN ratio higher in the important sound collection area than in other areas.

12. The method of supporting arrangement design of acoustic devices, according to claim 2, the method comprising:
receiving setting of a normal sound collection area that is present in the acoustic space;
calculating first arrangement distribution;
obtaining a first sound collectable area in the calculated first arrangement distribution;
obtaining second arrangement distribution in which the distribution is calculated in a second sound collection area obtained by excluding the first sound collectable area from the normal sound collection area; and
outputting the second arrangement distribution.

13. The method of supporting arrangement design of acoustic devices, according to claim 2, the method comprising:
calculating second arrangement distribution by receiving setting of an non-constant sound collection area that is present in the acoustic space;
obtaining a second sound collectable area in the calculated second arrangement distribution;
obtaining third arrangement distribution in which the distribution is calculated in a third sound collection area obtained by excluding the second sound collectable area from the non-constant sound collection area; and
outputting the third arrangement distribution.

14. The method of supporting arrangement design of acoustic devices, according to any one of claim 1 to claim 13, the method comprising:
receiving a position of a speaker in the acoustic space; and
further calculating the arrangement distribution based on the position of the speaker.

15. The method of supporting arrangement design of acoustic devices, according to any one of claim 1 to claim 14, the method comprising:
receiving request data according to a request of a user for a sound environment with respect to the calculated arrangement distribution;
preparing a trained model trained so as to output arrangement information on an acoustic device to the inputted data, inputting the request data into the trained model, and reobtaining the arrangement distribution of the corresponding acoustic devices; and
outputting the reobtained arrangement distribution.

16. The method of supporting arrangement design of acoustic devices, according to claim 15, the method comprising receiving an input of text data by use of an interactive natural language processing model and receiving the request data based on the text data.

17. The method of supporting arrangement design of acoustic devices, according to any one of claim 1 to claim 16, wherein the arrangement distribution of the acoustic devices includes connection information between a plurality of acoustic devices or a parameter of signal processing to be performed in the acoustic devices.

18. The method of supporting arrangement design of acoustic devices, according to any one of claim 1 to claim 17, the method comprising receiving current information that shows a current installation state of the acoustic devices, wherein the arrangement distribution of the acoustic devices includes correction information with respect to the current information.

19. An information processing apparatus comprising a processor that
receives an acoustic space and a position of a sound source in the acoustic space and a position of a noise source in the acoustic space,
calculates, in the received acoustic space, arrangement distribution of acoustic devices corresponding to the position of the sound source and the position of the noise source that have been received, and
outputs the calculated arrangement distribution.

20. A program that causes an information processing apparatus to execute processing comprising:
receiving an acoustic space and a position of a sound source in the acoustic space and a position of a noise source in the acoustic space;
calculating, in the received acoustic space, arrangement distribution of acoustic devices corresponding to the position of the sound source and the position of the noise source that have been received; and
outputting the calculated arrangement distribution.
